# EUROPEAN PATENT SPECIFICATION

(11) **EP 4 604 877 B1**
(45) Date of publication and mention of the grant of the patent: **02.12.2026**
(21) Application number: 23794032.5
(22) Date of filing: 20.10.2023
(51) Int. Cl.: A61C 19/00, A61C 3/00, A61C 8/00

(54) **TOOL FOR TRANSFERRING A DENTAL TOOL TIP BETWEEN AN ASSEMBLED AND A DISASSEMBLED STATE AND METHOD FOR REMOVING A DENTAL TOOL TIP FROM A DENTAL INSTRUMENT**
WERKZEUG ZUM TRANSFER EINER DENTALWERKZEUGSPITZE ZWISCHEN EINEM MONTIERTEN UND EINEM DEMONTIERBAREN ZUSTAND UND VERFAHREN ZUM ENTFERNEN EINER DENTALWERKZEUGSPITZE VON EINEM DENTALINSTRUMENT
OUTIL POUR TRANSFÉRER UNE POINTE D'OUTIL DENTAIRE ENTRE UN ÉTAT ASSEMBLÉ ET UN ÉTAT DÉMONTÉ ET PROCÉDÉ POUR RETIRER UNE POINTE D'OUTIL DENTAIRE D'UN INSTRUMENT DENTAIRE

(30) Priority: 21.10.2022 EP 22203107
(43) Date of publication of application: 27.08.2025
(73) Proprietor: Ferton Holding S.A., 2800 Delémont (CH)
(72) Inventor: RASSINOUX, Michael, 2800 Delémont (CH); BACLE, Timothée, 2800 Delémont (CH); ERENT, Julien, 2800 Delémont (CH); BÉANI, Florent, 2800 Delémont (CH); PICHAT, Patrick, 2800 Delémont (CH); MICHAUD, Frédéric, 2800 Delémont (CH)
(74) Representative: Müller Schupfner & Partner Patent- und Rechtsanwaltspartnerschaft mbB (Muc)
(86) International application number: PCT/EP2023/079342
(87) International publication number: WO 2024/084068

(56) References cited:
- EP-A1- 2 662 312
- US-A1- 2011 166 555

## Description

The present invention concerns a tool for transferring a dental tool tip between an assembled and a disassembled state and a method for removing a dental tool tip from a dental instrument.

It is well known in the prior art that dental instruments, such as a scaler or a powder gas jet device, have tool tips or nozzle elements, which can be attached to a handpiece of a dental instrument. Such tool tips are usually removable and therefore the dental instrument as well as the dental tool tip are configured to frequently exchange the tool tip by attaching them to the dental instrument such as a handpiece and/or by removing the tool tip from the dental instrument. Such a frequent exchange of the tool tips, which might even happen during a dental treatment, can negatively affect the lifetime of the tool tip. Further, it is difficult for an operator to attach the dental tool tip to the dental instrument, since they need to provide sufficient force. However, this force needs to be applied in the proper way, otherwise there is a risk of damaging the dental tool tip, the dental instrument or even the operator. This is especially true, when the dental tool tip is a pointed end tool tip, such as a scaler tip, which is used to remove plaque, biofilms and calculus from teeth. Further, it is necessary that the dental tool tip is attached in a proper way to the dental instrument. Otherwise, there is the risk that the dental instrument gets loose during the dental treatment, especially when the dental tool tip experiences a high frequency oscillation and/or interacts with teeth or the surface of teeth. US 2011 166 555 A1 discusses device carriers for insertable medical devices. The device carrier holds an insertable medical device in a desired orientation to allow it to be grasped by an insertion tool. EP 2 662 312 A1 deals with a package for a drill.

Considering the above, it was an object of the present invention to provide a tool, which simplifies the transfer of the dental tool tip between an assembled state and a disassembled state and improves the connection between the tool tip and the dental instrument. The present invention solves this object by the tool according to claim 1 and the method according to claim 15. Preferred embodiments are incorporated in the dependent claims, the description and the figures. According to a first aspect of the present invention.

According to a first aspect of the present invention a tool for transferring a dental tool tip between an assembled state and a disassembled state, is provided the dental tool tip
- being arranged partially in an insert region of a dental instrument in an assembled state, and
- being removed from the insert region of the dental instrument in a disassembled state, the tool comprising
   -- at least a first receiving section being configured to receive at least the insert region of the dental instrument and at least a part of the tool tip and
   -- at least a first pushing element being configured to perform a first pushing movement, wherein by performing the first pushing movement, the first pushing element causes a pushed movement of the dental tool tip to transfer the dental tool tip from a first state to a second state, first and second states being distinct and chosen between the assembled state and the disassembled state, when at least the insert region and at least a part of the tool tip are arranged in the first receiving section.

Contrary to the tools being known from the prior art, the present invention suggests to realize a first pushing movement, which causes a first pushing element to cause a pushed movement for performing the transfer between the disassembled state and the assembled state. Thus, the present invention provides the solution to perform the transfer between the assembled and disassembled state. Especially, the first receiving section is intended to fix the insert region being part of the dental instrument, especially of the distal end of the dental instrument, in one defined position such that the first pushing element, for example entering the first receiving section, can remove the dental tool tip by a simple pushed movement, especially by pushing the dental tool tip into the assembled state or into the disassembled state. Another benefit of using just a first pushing movement compared to a pure manual insertion or removing is the possibility to fine adjust the force, as well as the extension of the movement, such that a precise attachment or removing process can be established.

Preferably, tool tip is attached to the dental instrument via a press-fit connection or a force-fitting connection. In particular, it turned out that the tool is of advantage, when the tool tip is attached to the dental instrument via a press-fit connection or a force-fitting connection. Especially, the connection is realized by a pure force fitting connection, i. e. force fitting connection, such that for attaching or removing the dental tool tip there is no screwing necessary or no form fitting is used for fixing the tool tip. However, in such cases it is necessary that a comparably high force is applied to attach the dental tool tip to the insert region for avoiding that the dental tool tip gets loose during the treatment. This is especially true, when the tool tip is made from metal, such as titanium. However, the tool can also be used to transfer a plastic tool tip between the assembled and disassembled state.

Preferably, the pushed movement is a pure translation movement. In other words: By the pushed movement only a translation without any rotation is caused. The dental tip is just pushed, without acting on the dental tool tip in a way that causes dental tool tip to rotate.

In particular, it is provided that the dental tool tip and the dental instrument form a scaler in an assembled state, wherein the tool tip is realized by a needle like and/or straight extending tool tip. The straight extending tool tip extends from a proximal end to its distal end and forms a pointed end at the distal end. Such a pointed tip represents a risk for the operator to hurt themselves, especially during the assembly of the tool at the dental instrument. The tool tip might also be curved, at least partially or in a section. In particular the dental tip is configured to be attached to the dental instrument by a non-screwing mechanism. Preferably, the dental tool tip is attached to the dental instrument by a press-fit mechanism and/or a torque wrench mechanism.

Furthermore, the dental instrument includes a head section having an insert region. The insert region is preferably formed as a channel extending substantially transverse to the head section of the dental instrument, especially from a back side to a front side. The front side faces to the teeth when the dental tool is in operation, while the back side is opposite to the front side. For attaching the straight extending tool tip, the tool tip needs to be inserted into this channel-like insert region. Preferably, the insert region has a constant cross-section extending along a direction transverse through the head section. Thus, it is possible to insert the dental tool tip by entering the insert region via a back side, when the insert region forms a channel extending through the head section. In particular, the insert region is formed as a bore hole extending through the head section. Preferably, it is provided that the insert region is part of a distal end of the dental instrument, being formed as a sphere or cylinder. Preferably, the tool comprises the first receiving section being configured to receive a part of the dental instrument including the insert region

In particular, it is provided that the pushed movement of the first pushing movement and the pushed movement of the second pushing movement are directed along pushing directions extending parallel to each other. Preferably, these pushed movements are mainly directed antiparallel to each other or parallel to each other. This allows providing a compact tool. Especially, the second receiving section is configured to accommodate at least the insert region and the tool tip in the assembled state.

Preferably, it is provided that the first pushing element comprises an actuation section and/or is coupled to an actuation means, wherein the actuation section and/or the actuation means is configured to cause the first pushing movement of the first pushing element. Preferably, the same applies for the second pushing element analogously. In particular, it is provided that the pushing element is formed as single piece, the actuation section of which is a grip or a grip-like section.

Moreover, it is conceivable that the actuation means and/or the actuation section is screwable or piston-like. This allows a simply actuation for the operator to exchange the tool tip. Further, that the actuation means or the actuation section is configured to be actuated manually and/or by a driving means.

In particular, it is provided that the first receiving section and/or second receiving section are configured such that the insert region, being received in the first receiving section or the second receiving section, extends along one of the pushing directions.

Preferably, it is provided that the first receiving section and/or the second receiving section includes means for fixing the dental tool tip and the part of the dental instrument. For example, it is conceivable that a specific insertion movement of the head section of the dental instrument into one defined position is required, when it is arranged inside the first receiving section and/or the second receiving section. For example, it is possible that the first receiving section includes a groove and/or a guiding region, wherein the dental tool tip and/or the part of the dental tool tip being inserted in the first receiving section, is pressed into the groove and/or the slotted guidance and/or channel such that the head section or the part of the dental instrument is aligned in a preferably defined way, i. e. the fixed part of the dental instrument is orientated and arranged such that position and orientation of the fixed part of the dental tool are always the same. Especially, the first receiving section and/or second receiving section are arranged such that the insert region is aligned flush to or along a line with the direction along which the first pushing element is moved during the first pushing movement, when the insert region is inserted and/or fixed into the first receiving section and/or second receiving section. As a result, the moving first pushing element can contact the proximal end of the dental tool tip and pushes it into the insert region and/or out of the insert region.

Preferably, it is provided that the tool is configured such that the first pushing element and/or second pushing element acts on the proximal end of the dental tool tip for performing the pushed movement. Thus, the first pushing element and/or second pushing element is suitable to push and press the tool tip into the proper position in the assembled state or to remove it from the assembled state. Preferably, it is provided that the tool is configured such that for both removing and attaching the tool tip, the first pushing element and the second pushing element performs a pushing, which acts on the distal end of the tool tip. Especially, the first pushing element and/or second pushing element is moved towards the back side of the insert region, being in particular formed as a channel, for pushing the dental tool.

Preferably, it is provided that the first pushing movement is mainly parallel to the pushed movement. As a consequence, there is no complex pivot or rotational movement of the first pushing element necessary to perform the first pushing movement.

Preferably, it is provided that the first pushing element is configured to perform the first pushing movement, when the first pushing element is rotated about an axis being parallel to the first pushing movement. Particularly, the same applies analogously for the second pushing element. For this reason, the first pushing element and/or the second pushing element includes a thread, which interacts with a corresponding thread at the inner side of the tool. Thus, it is possible to rotate the first pushing element and especially screw it into the tool for performing the first pushing movement. Especially, it is provided that the first pushing element includes a region, the front region acting directly on the proximal end of the dental instrument. Preferably, it is provided that the first pushing element includes a grip region, the threaded region being located between the grip region and the front region, wherein the front region is in contact with the proximal end of the tool tip. Preferably, it is provided that the first pushing movement, being performed by the first pushing element includes two sequences. In the first sequence the first pushing element performs the first pushing movement without being in contact with the proximal end of the distal tip. In a second sequence of the first pushing movement, the first pushing element is in contact with the proximal end of the dental tool tip for pressing it into the insert region or out of the insert region.

In other words: In the first sequence there is actually no pushing action, which causes the movement of the dental tip. This is especially an advantage, when the first pushing element needs to be spaced from the dental tool tip, when the dental tool tip is introduced into the tool for allowing the dental instrument, having the dental tool tip, to access the first receiving section/second receiving section and to remove the assembled tool tip and the dental instrument subsequently. Otherwise, the first pushing element hinders the dental instrument part, being included in the first receiving section, to be removed.

Preferably, it is provided that the tool comprises a second receiving section to receive at least a part of the dental tool tip, wherein the second receiving section is configured such that the dental instrument and the tool tip are arranged in the second receiving section in a pre-assembled state.

Preferably, it is provided that in addition to the shape of the dental instrument, having the assembled tool tip, the shape of the first receiving section and/or the second receiving section is adapted to a shape, which corresponds to the part of the dental instrument being included in the first receiving section and the tool tip in a pre-assembled state. In this pre-assembled state, the tool tip is not completely attached to the insert region. For example, the dental tool tip is arranged loose in the insert region, for example by extending through the hole or bore forming insert region, which is formed at the distal end of the head section, but the tool tip extends out of the back side of the insert region, such that the tool tips in the pre-assembled state extend outside the insert region on both opposite ends of the insert region.

Furthermore, it is preferably provided that the first receiving section is formed to receive a dental tool tip extending straight. As a consequence, the shape of the first receiving section extends channel-like or it at least follows a direction that extends straight. Thus, the tool tip can be pressed through the insert region, while assembling and disassembling.

Preferably, it is provided that the tool includes a catching area for catching the disassembled dental tool tip, when the dental tool tip is transferred from the assembled state to the disassembled state. As a consequence, it is possible to avoid that the operator needs to catch or hold the tool tip during the disassembling process. Instead, the disassembled tool tip just drops into the catch area and can be removed by the operator after the transfer from the assembled state to the disassembled state. As a consequence, a risk of damage of the tool tip or the operator is further reduced.

Preferably, it is provided that the too includes a section for a visually checking a wear status of the dental tool tip, when the tool tip is inserted in the section, and/or includes a reference mark to check a wear status of the dental tool tip. For example, the dental instrument includes a reference mark or several reference lines that allow to compare the reference mark to the length of the tool tip. In case of a tool tip extending not up to the reference line, the operator is informed that the tool tip might no longer be useful. Therefore, the tool comprises a section, to which the operator has visual access, especially when the dental tool tip is transferred from the disassembled state to the assembled state. In this case the operator cannot only perform the attachment process but can also use the situation, in which the part of the dental instrument and the tool tip are aligned in a defined way to check, whether the length of the tool tip is sufficient. Thus, an additional tool for checking the tool tip length is no longer necessary. Furthermore, the tool provides the tool tip in a defined way, such that the reference for checking the wear status is always the same and therefore reliable.

Furthermore, it is provided that the tool is configured to remove another tool tip, preferably from another dental tool. For example, it is conceivable that the tool is configured to also remove a nozzle element, being attached to a handpiece of a powder jet device. Thus, the tool can also be used for removing a nozzle element, i. e. another dental tool tip from preferably a totally different dental instrument. For example, the tool includes a recess and/or slotted hole which can be pulled over the further dental tool tip and by creating a rotation or pivoting movement, the further tool tip can be removed from the handpiece, for example of a powder gas jet device.

Furthermore, it is provided that the first pushing element and/or the second pushing element is configured to cause a pushing force having a value between 5 N and 500 N, preferably between 25 N and 450 N and most preferably between 50 N and 250 N. Thus, it is possible to even install tool tips being made of metal in a proper and sufficient way, especially without hurting the operator and guaranteeing a sufficient proper connection between the tool tip and the dental instrument.

Preferably, it is provided that the tool tip is disc-shaped and/or pen-shaped. In case of the disk-shaped tool it is possible to create an increased lever effect, especially if one of the first pushing elements is configured as a half disc which rotates around an axis parallel to the first pushing movement and/or pushed movement. The pen-like tool can be stored easily.

Preferably, it is provided that the tool includes a claw-like section, in particular for forming a part of an open-end spanner. Especially, the size and dimensions are configured such that the tool can also be used for interacting with a bottom part of a powder chamber in a powder jet gas device. Thus, the tool can also be used, especially at a side being different from the side having the first receiving section and the second receiving section and the hole, for removing the other further dental instrument to remove a bottom plate of the powder chamber. Such a powder chamber might be opened for inserting new powder into the powder chamber or to use a new interior inside the powder chamber.

Furthermore, it might be conceivable that the claw-like section is used to rotate an aperture being intended to adapt the air flow, which enters the powder chamber.

Another aspect of the present invention is a use of a tool according to the present invention for removing a dental tool tip from a dental instrument, for attaching a dental tool tip to a dental instrument and/or to open a powder chamber. All specifications and benefits being discussed in context of the tool applies analogously to the use and vice versa.

Another aspect of the present invention is a method for removing a dental tool tip from a dental instrument by using a tool according to the present invention, comprising:
- inserting a part of the dental instrument into the first receiving section and
- performing the first pushing movement for transferring the dental tool tip from the disassembled state to the assembled state. The specifications and benefits being discussed in context of the tool applies analogously to the method of the invention and vice versa.

Another aspect of the present invention is a system of a tool according to the present invention and a dental instrument, preferably a scaler, in particular an ultrasound scaler having a needle like tool tip, extending straight. The specifications and benefits, being discussed in context of the tool applies analogously to system and vice versa.

Wherever not already described explicitly, individual embodiments or their individual aspects and features can be combined or exchanged with one another without limiting or widening the scope of the described invention, whenever such a combination or exchange is meaningful and in the sense of this invention. Advantages which are described with respect to one embodiment of the present invention are, wherever applicable, also advantageous of other embodiments of the present invention.

In the drawings:
- **Fig. 1**: Tool for transferring a dental tool tip between an assembled state and a disassembled state according to a first preferred embodiment of the present invention
- **Fig. 2a to 2f**: schematically illustration of transferring the dental tool tip between the assembled state and the disassembled state according to a first embodiment of the present invention by using the tool of figure 1
- **Fig. 3**: Tool for transferring a dental tool tip between an assembled state and a disassembled state according a second preferred embodiment
- **Fig. 3a to 3c**: schematically illustration of transferring the dental tool tip from the assembled state to the disassembled state according to a second embodiment of the present invention by using the tool of figure 3
- **Fig. 4a to 4d**: schematically illustration of transferring the dental tool tip between from the disassembled state to the assembled state according to a second embodiment of the present invention by using the tool of figure 3
- **Fig. 5a to 5c**: schematically illustration of opening a powder chamber by using the tool of figure 3
- **Fig 6a to 6d**: schematically illustration of using the tool of figure 3 for removing another dental tool tip.

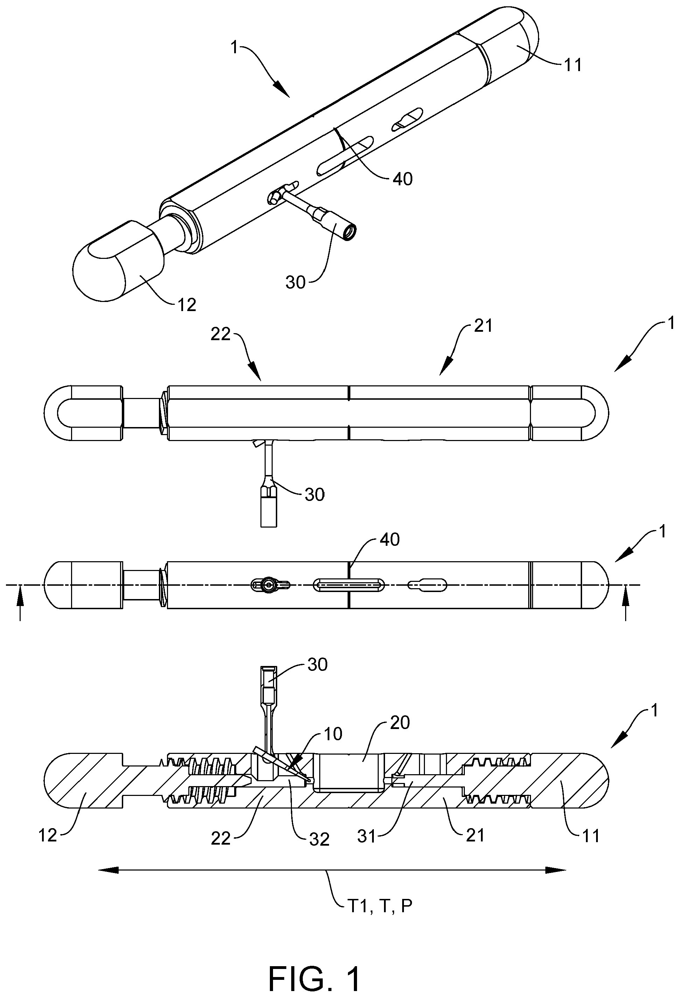

**Figure 1** shows a tool 1 for transferring a dental tool tip 10 between an assembled state and a disassembled state according to a first exemplary embodiment of the present invention. Dental tool tips 10 are well-known and are attached in the assembled state to a dental instrument (the complete dental instrument is not shown in figure 1). For example, the dental instrument is a scaler, which performs an ultrasound movement of a head section 30 of the dental instrument. In the attached state, i.e. the assembled state, the tool tip 10 is attached to the head section 30 of the scaler. The tool tip 10 contacts or treats the tooth in operation. Preferably, the dental tool tip 10 is attached to the dental instrument in an exchangeable manner, in particular to the head section 30 of the dental instrument. The head section 30 preferably forms the distal end of the dental instrument. For example, the head section 30 or distal end of the dental instrument is fixed to a hand piece via a screwing mechanism. In the figures being presented here, the tool tip 10 is attached to the head section 30 of the dental instrument in a force-fitting manner. In particular the connection between the tool tip 10 and the dental instrument, in particular the head section 30 of the dental instrument, is realized by a press fit connection. In particular, it is provided that the connection between the dental tool tip 10 and the dental instrument is free of a screwing mechanism to attach the dental tool tip 10 to the dental instrument. Furthermore, the dental tool tip 10 extends straight and is attached to the head section 30 by forming an angle to a moving direction along the head section 10 moves during its oscillation. Preferably, the angle between the moving direction and the extension of the straight tool tip 10 is about 30 to 60°, preferably between 40 and 60° and most preferably between 40 and 50°.

Handling dental tool tips 10 is accompanied by several challenges. For creating a press-fit connection or a pure force fitting connection between the head section 30 of the dental instrument and the dental tool tip 10 a sufficient pressure, i. e. a certain force has to be applied to the dental tool tip 10. Otherwise, there is a risk that the assembled tool tip is not fixed strong enough for staying attached during the oscillation movement, especially during treating the tooth. Further, interacting with high forces causes a risk of damaging the dental tool tip 10. Especially, in case of not applying the force in a proper way might lead to a deformation or crack which could hinder the tool tip 10 from being used.

The tool 1 of figure 1 for transferring the dental tool tip 10 between an assembled state and a disassembled state supports an operator, when they are interested in removing the tool tip 10 from the dental instrument and/or interested in attaching the dental tool tip 10 to the dental instrument.

In Figure 1, the exemplary embodiment is intended to establish both a transfer from the assembled state to the disassembled state and from the disassembled state to the assembled state. Preferably, the dental tool tip 10 is arranged partially in an insert region of a dental instrument in the attached state and preferably fixed to the insert region in a force-fitting manner, in particular in a pure force fitting manner. Especially, the insert region is formed as a recess, in particular as a hole, which extends through the head section 30 of the dental instrument. The head section 30 preferably includes a distal end, being formed as a sphere or cylinder, the insert region being incorporated into this spherically and/or cylindrically shaped distal end. In particular, the insert region is configured such that the straight extending dental tool tip 10, can enter a backside of the insert region and by shifting the tool tip 10 through the insert region, the pointed end of the dental tool tip 10 exits the front side of the insert region, being opposite to the backside. In other words: The insert region is configured such that a needle like and straight extending tool tip 10 can be pushed through the insert region until the assembled state is established.

In figure 1 the needle-like and straight extending tool tip 10 is attached to the insert region of the dental instrument in a pre-assembled state. In the pre-assembled state the dental tool tip 10 is preferably already reaching through the insert region, especially formed by a channel extending through the head section 30 of the dental instrument, but the dental tool tip 30 is not finally fixed to the head section 30 of the dental instrument. Instead, the dental tool tip 10 is arranged loosely in the insert region without being attached to the insert region, for example by a press fit connection. For transferring the tool tip 10 into the assembled state, the tool 1 is provided. The tool 1 includes a first receiving section 31 and a second receiving section 32. Further, the tool 1 comprises a main body, the main body comprising the first receiving section 31 and the second receiving section 32. Especially, the main body is divided into a first section 21, being intended for attaching the dental tool tip 10 to the dental instrument and into a second section 22 for removing the dental tool tip 10 from the dental instrument. Especially, the first receiving section 31 and second receiving section 32 are incorporated into a main body, having a mainly cylindrical shape. The main body further includes flat lateral sides for improving the grip of the tool 1. For attaching the dental tool tip 10 to the dental instrument, the pre-assembled dental tool tip 10 is inserted, in particular the insert region of the instrument tool is inserted into the second receiving section 32 together with pre-assembled dental tool tip 10. Especially, the second receiving section 32 is formed such that the inserted insert region, including the pre-assembled dental tool tip 10, is oriented along a pre-determined direction. In figure 1 the insertion process is not finished and the insert region and the tool tip 10 enter an opening of the second receiving section 32 for being properly placed inside the tool 1. In particular, the tool 1 includes a channel-like section as second receiving section 32 such that the dental tool tip 10 can extend mainly along the longitudinal direction of the tool 1.

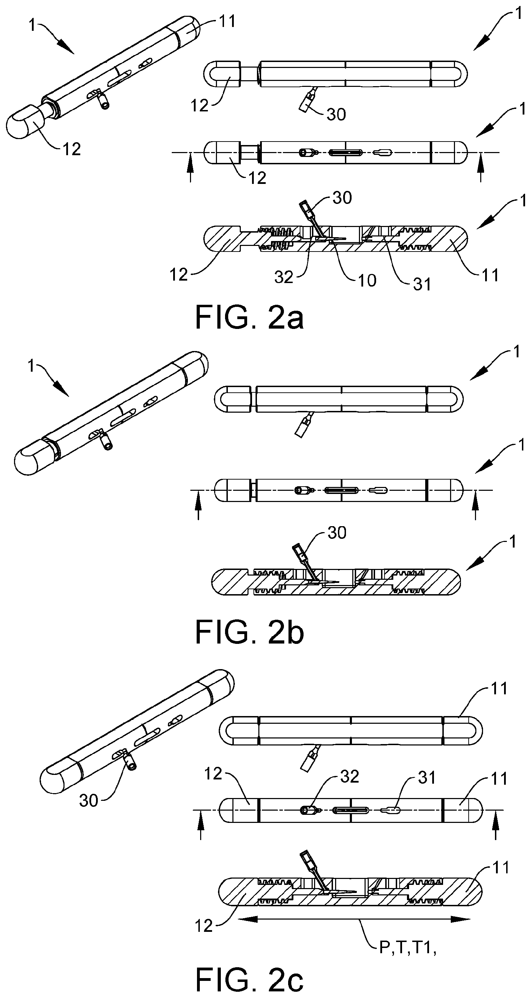

In the **figures 2a to 2g** the process of transferring the tool tip 10 from the disassembled state to the assembled state is illustrated step by step. In figure 2a the dental instrument, i. e. the head section 30, is located at its determined position, which is defined. In this defined position the dental tool tip 10 and/or the insert region has a determined and unique, i. e. unambiguous, orientation within the tool 1. Especially, the inner side of the channel forming at least a part of the second receiving section 32 is dimensioned such that the inserted head section can be placed into this region only in one defined manner. In particular, it is preferred that for inserting the dental instrument in this position, in addition to the movement for inserting the head section, the whole pre-assembled arrangement of insert region and dental tool tip are shifted, preferably along a longitudinal direction of the tool 1. Especially, the tool 1 includes a long /slotted hole, which guides the dental instrument, especially a cylindrically shaped section of the dental instrument until the head section reaches its desired final position.

Preferably, the dental instrument cannot rotate about an axis extending mainly parallel to the longitudinal direction. In other words: The dental instrument is hindered to rotate, when the insertion process is finished. Furthermore, the head section, especially its distal end, including the insert region abuts at an end of the channel forming the first receiving section 31 such that the movement of the head section is also restricted, at least along one direction extending parallel to the longitudinal direction of the base body in the example of figure 2a. Furthermore, the pre-assembled tool tip 10, for example the needle, can reach through an opening or hole, being formed at the end of the channel forming the second receiving section 32. The tool tip 10 passing through this opening or hole is located at least partially in a central region of a tool 1 to transfer the dental tool tip 10 between the disassembled and the assembled state.

Furthermore, the tool 1 includes a first pushing element 11 and a second pushing element 12. The first pushing element 11 is assigned to the first receiving section 31 for removing the tool tip 10 from the insert region and the second pushing element 12 is assigned to the second receiving section 21 for performing the assembling. As illustrated in the figures 1, as well as in the figures 2a to 2f, the first pushing element 11 and/or the second pushing element 12 are configured as knob-like element and preferably include an interaction section. The interaction section being intended for interacting with a thread or spindle-like mechanism for creating a first pushing movement of the first pushing element 11 and/or a second pushing movement of the second pushing element, when it is rotated or turned. A pushed movement T is caused by a rotation of the first pushing element 11 and by the corresponding first pushing movement of the first pushing element 11. The same applies for the pushed movement T1 being caused by the second pushing movement of the second pushing element 12. The first pushing movement and/or the second first pushing movement in the embodiment of figure 2a corresponds to a movement along the longitudinal direction of the main body.

By screwing the second pushing element 12 into the main body, a front region of the second pushing element 12 gets in contact with the proximal end of the tool tip 10. This is actually shown in the cross-sectional view in figure 2b, which shows that the proximal end of the tool tip 10 is in contact with the pin-like front region of the second pushing element 12. Further, figure 2b shows that the second pushing movement is not finished in the situation being illustrated in figure 2b. Especially, as shown in figure 2c, the second pushing movement continues and due to the contact of the front region of the second pushing element 12 and the distal end of the dental tool tip 10, the second pushing movement P causes a pushed movement T of the dental tool tip 10, especially along a direction being parallel to the longitudinal direction of the main body. Especially, the second pushing element 11 and the dental tool tip 10 perform movements along the same direction, corresponding to the direction of the second pushing movement P and the pushed movement T. In figure 2c the second pushing movement P is finished and as being illustrated, the tool tip 10 is attached to the head section 30 of the dental instrument.

In other words: The tool tip 10 has been transferred from the disassembled state via the pre-assembled state to the assembled state, as illustrated in figure 2c. Actually, the front region of the second pushing element 12 is dimensioned such that it is greater than the diameter of the proximal end of the dental tool tip 10 and/or a cross section of the insert region at the back side. As a consequence, it is not possible that the second pushing element 12 pushes the tool tip 10 such that it is not located in its proper position. Furthermore, the second pushing element 12 is configured such that the second pushing movement is automatically stopped when the second pushing element 12 is in its finished state.

For example, the threads are dimensioned and configured such that there is no further rotation possible, when the front-end region of the second pushing element 12 arrives at the insert region of the head section 30 of the dental instrument. Thus, it is guaranteed that the needle like tool tip 10 is not pushed too far into the insert region.

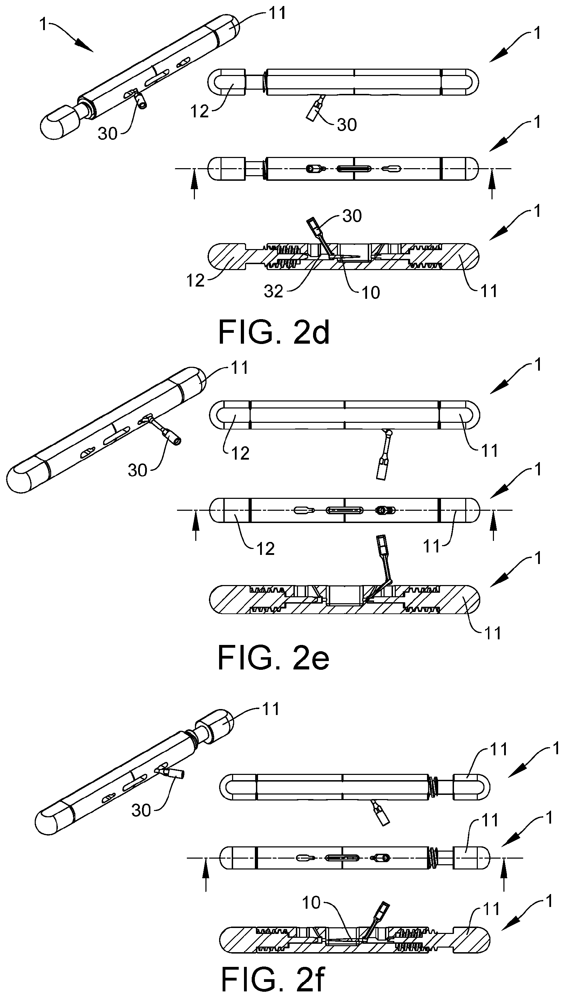

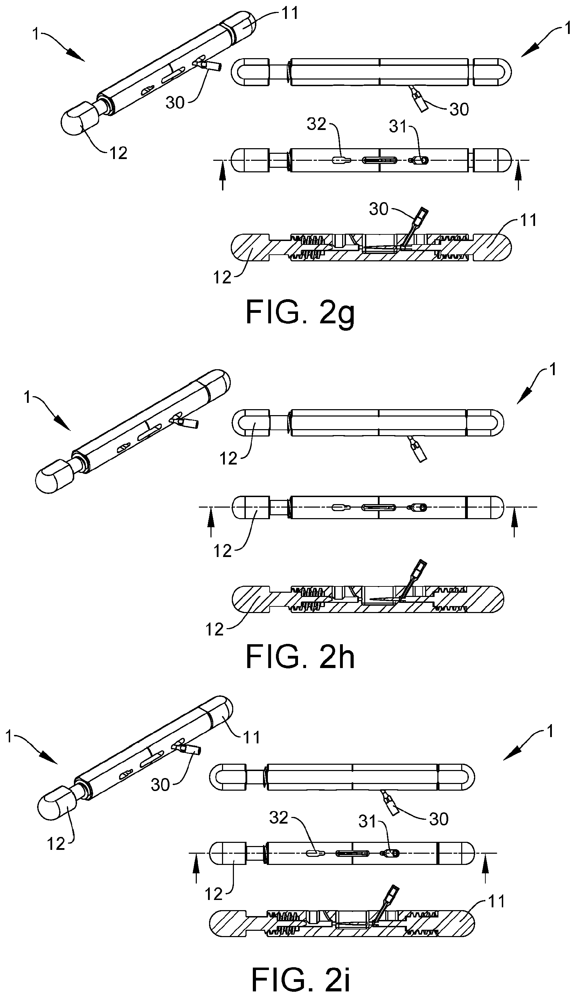

This would otherwise create an improper attachment of the tool tip 10 to the dental instrument. In figure 2g) it is shown that the second pushing element 12 is unscrewed from the final position, in which the assembled state is reached. As a result, it is possible to remove the dental instrument, especially the head section 30 having the assembled tool tip 10 from the tool 1, i. e. remove the dental instrument including the dental tool tip 10 from the second receiving section 32. This is shown in figure 2d.

In the figures 2e) to 2i) removing the dental tool tip 10 is illustrated. In other words: The figures 2e) to 2i) show the transfer of the dental tool tip 10 from the assembled state to the disassembled state. In this case, the head section 30 having the assembled dental tool tip 10 is inserted into the first receiving section 31. The first receiving section 31 and the second receiving section 32 are mainly formed similar to each other and are respectively mainly form a channel for inserting the head section 30, especially for locating the head section at least partially, preferably partially, inside these channel-like first receiving sections 31 in a predetermined and defined position. For this reason, the first receiving section 31 of the embodiment in the figures 1 and 2 a) to e) includes the reduced cross section, into which the head section 30 is forwarded or shifted for fixing the head section 30 to hinder a rotation about a rotational axis extending parallel to the longitudinal direction. Further, the head section 30 is inserted into the first receiving section 31 by a combination of a pushed movement, as well as a pivoting movement, which cause the dental tool tip 10 to be aligned along a direction following the channel inside the first receiving section 31 31, especially extending along a direction being parallel to the longitudinal direction of the main body. In figure 2f), the first receiving section 31 is filled by the head section 30 having the assembled tool tip 10. In figure 2g), the first pushing element 11 is moved along the pushing direction P, when it performs the first pushing movement. The first pushing movement is caused by rotating the first pushing element 11 and due to the threaded interaction section, the rotating first pushing element 11 is shifted along the longitudinal direction for performing the first pushing movement along the pushing direction P. In figure 2g), the front region of the first pushing elements 11 contacts the proximal end of the tool tip 10. In particular, the first pushing element 11 and the second pushing element 12 distinguishes from each other with respect to the shape of their front ends/regions. The first pushing element 11 has a front region, having a diameter being smaller than the diameter of the proximal end of the dental tool tip 10, especially of the insert region at its back side. The back side of the insert region is defined as side being opposite to the front side facing the teeth when the dental instrument is in operation. The front-end region could also have a diameter, which is equal to the diameter of the proximal end of the dental tool tip 1. In contrast to this, the diameter of the front-end region of the second pushing element 12 is larger than the diameter of the proximal end of the dental tool tip 10 or the insert region. Thus, it is possible that the front end of the first pushing element 11 can enter the insert region and by finalizing and continuing the first pushing movement, as illustrated in figure 2h, the first pushing movement of the first pushing element 11 can cause the pushed movement T of the dental instrument for transferring the dental instrument from the assembled state to the disassembled state.

The first pushing movement pushes the dental tool tip 10 out of the insert region. In particular, the tool 1 includes a box-like catching area 20, which is configured for receiving the tool tip 10 being removed from the insert region of the head section 30 of the dental instrument. Thus, it can be avoided that the operator needs to contact the needle-like tool tip 10 during the removing process without the danger that the tool tip 10 hits the ground when it gets removed from the dental instrument. This protects both the needle as well as the operator. The catching area 20 of the tool 1, being illustrated in the figures 1 and 2 is also used to check the wear status of the dental tool tip 10. For this reason, the tool tip 10 being arranged in the inserted state inside the first receiving section 31 and/or the second receiving section 31 extends into the area of the catching area 20. In other words: Second receiving section 32 and first receiving section 31 share a center section such that the tool tip 10 extends into this area, when it is inserted in either the first receiving section 31 or the second receiving section 32. By introducing a reference mark 40, it is possible to see whether the attached tool tip 10 reaches to this reference mark 40. In case of a tool tip 10, which does not extend to this reference mark 40, the wear status should hinder the operator from using the tool tip 10 again. Especially, the catching area 20 provides a visual access and/or as an access for the operator to remove the disassembled tool tip.

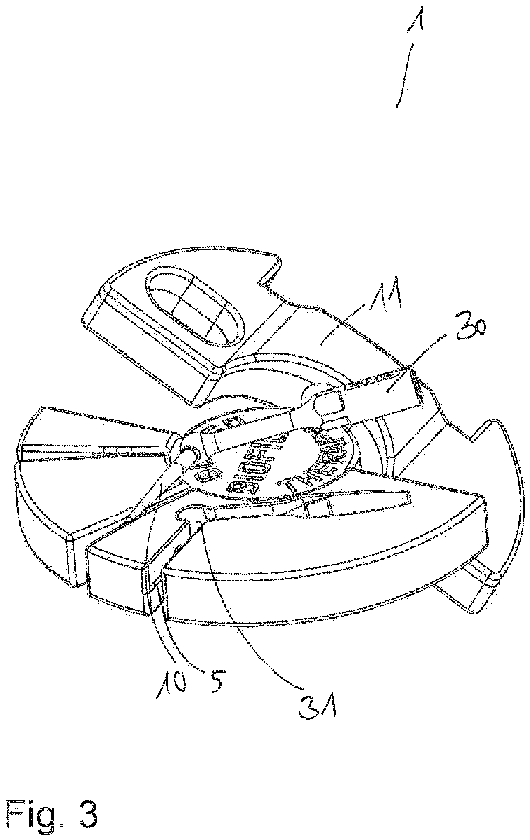

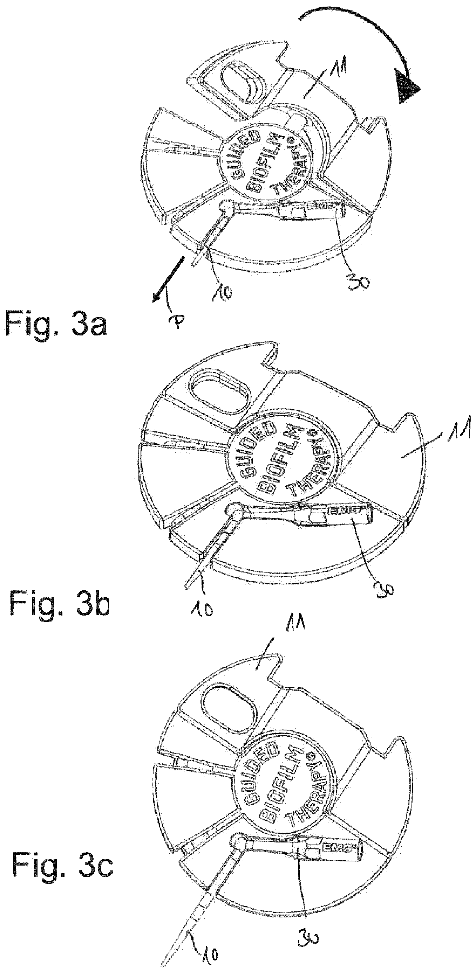

In **figure 3** a tool 1 according to a second exemplary embodiment of the present invention is illustrated. Contrary to the shape of the cylindrical base body of the figures 1 and 2, the shape of the base body is disc-like. Especially, the tool of figure 3 is formed by two, mainly half disc-like, elements, which can be rotated to each other. The figure 3 also includes a first receiving section 31 or a second receiving section 32 for placing the dental instrument, especially the head section of the dental instrument inside the first receiving section 31 and/or second receiving section 32. For fixing the dental instrument inside the first receiving section 31 in one defined position, a groove 5 is provided at the inner side of the first receiving section 31. In the inserted state, the dental instrument or head section 30 is pressed into the groove 5. Especially, the tool tip 10 is, for example partially, pressed into this groove 5.

Figure 3 illustrates a situation, in which the head section 30 is inserted into a first receiving section 31. Furthermore, the embodiment of figure 3 suggests a first receiving section 31, which has a shape, which not only matches the insert region, especially the distal end of the head section 30, but also further parts of the head section, i. e. parts of the instrumental device. Especially, the first receiving section 31 is mainly formed such that the whole or at least 80% of the head section 30, being screwable to the handpiece, can be arranged and fixed to the first receiving section 30 such that the first receiving section 31 surrounds the head section 30 at least at two sides. Thus, the arrangement of the tool tip 10, as well as the insert region can also be defined and supported by the very individualized shape of the first receiving section 31, which is configured to receive and to fix the head section 30. The figures 3a) to 3c) show the transfer of the tool tip 10 from the assembled state to the disassemble state. As also discussed in context of the embodiment of the figures 1 and 2, a rotation of the first pushing element 12 causes the first pushing element 12 to push the dental tool tip 10 to perform the pushed movement T, which transfers the dental tool 11 tip from the assembled state to the disassembled state. In the present case the disc-like shape allows to incorporate further functionalities into this tool 1 and in addition also allows to create or to apply huge forces during the rotation movement due to the increased leverage/torque.

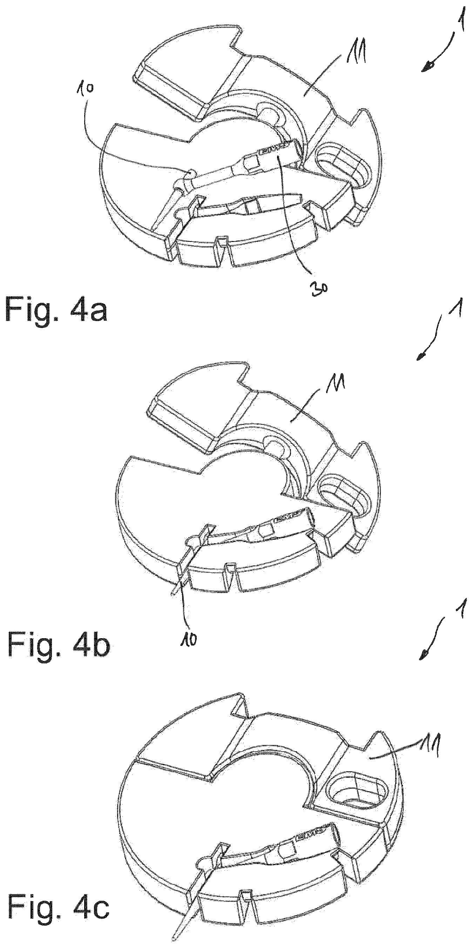

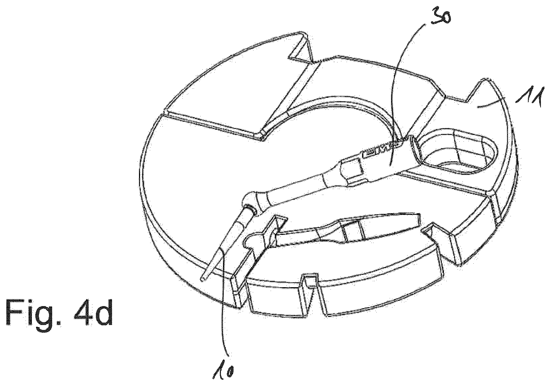

In the **figures 4a to 4d** a third exemplary embodiment of the present invention is illustrated. The third exemplary embodiment mainly corresponds to the version of the second exemplary embodiment. However, in addition to the second exemplary embodiment, the second receiving section 32 includes an additional section being configured to receive the head section, having a dental tool tip 10 in a pre-assembled state. As a consequence, the second receiving section 32 includes an additional free space in the section located at the proximal open end of the insert region, i. e. at its back side, when the head section 30 is inserted into the second receiving section 32. As a result, it is possible to insert the dental tool tip 10 and the dental instrument in a pre-assembled state into the second receiving section 32. Thus, it is possible by turning around the second pushing element 12 to transfer the tool tip 10 from the disassembled state to the assembled state as is discussed for example in context of the figures 2a) to 2d).

As already mentioned previously, the embodiment of the figures 3 and 4a) to d) includes additional functionalities. Especially the disc-like base body has a section being shaped as a claw-like section, especially a claw-like section forming a part of an open-end spanner. The shapes and sizes of this open-end spanner or claw-like section are adapted to the bottom of a powder chamber such that the tool 1 can also be used to remove a bottom section or bottom plate 52 of a powder chamber 50, in particular by performing a screwing mechanism, and for example to insert powder materials and/or to modify the interior of the powder chamber 50.

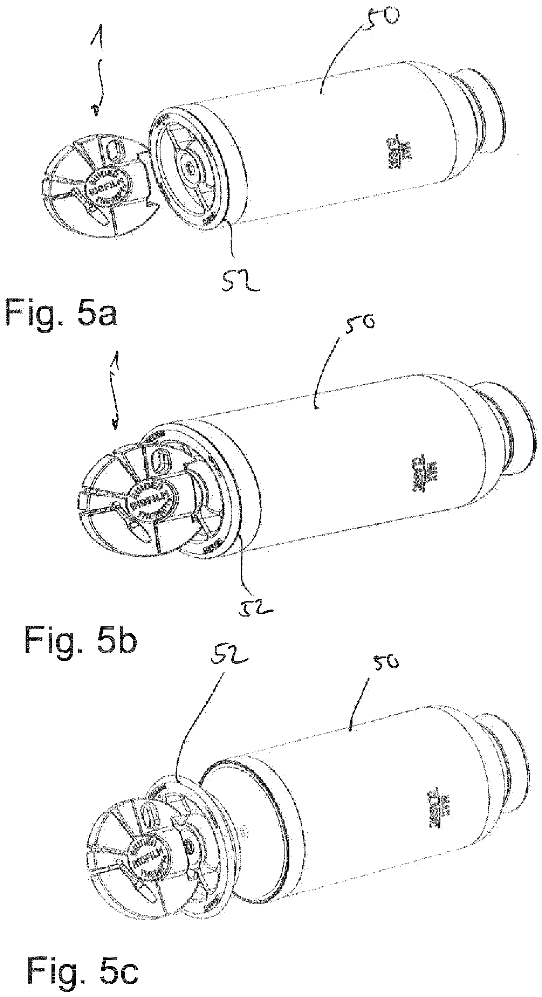

**Figures 5a to 5c** show how to reassemble or remove the bottom plate 52 from the powder chamber 50.

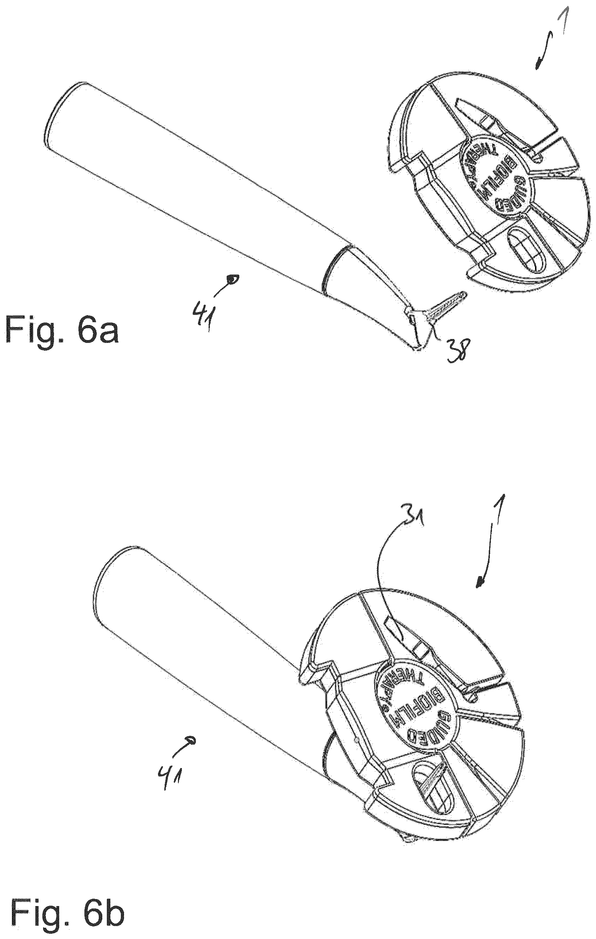

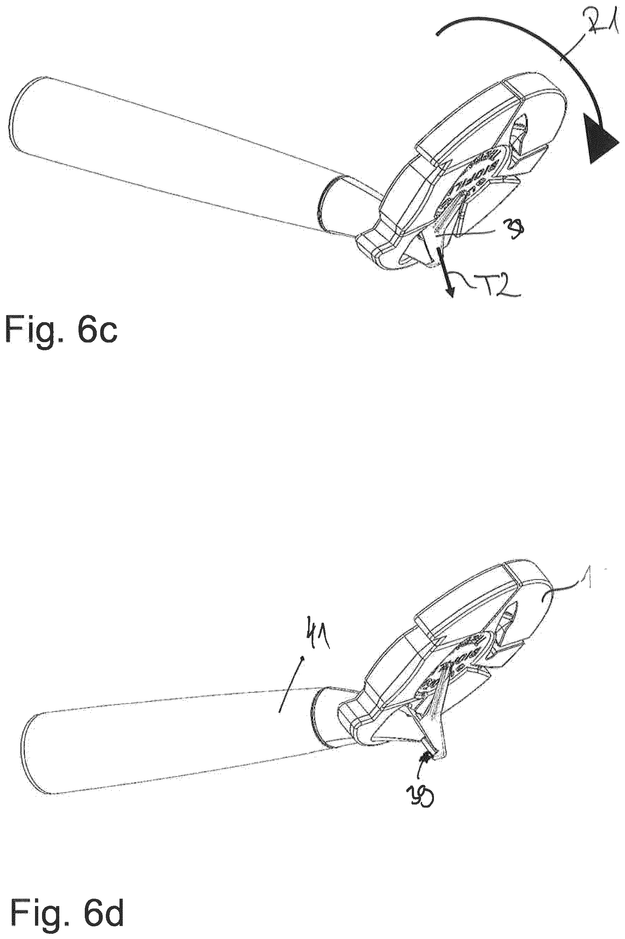

Furthermore, the **figures 6a to 6d** show another functionality of the tool 10 being illustrated in the figures 3, 4 and 5. Especially, the disc-like tool includes a recess 33, the recess 33 being configured such that a further dental tool tip from a different dental instrument 41 can be located inside this recess 33. Especially, the recess 33 is configured such that the recess 33 can be pulled over the further dental tool tip. In the figures 6a to 6d the further dental tool tip is a nozzle element 38 being attached to a handpiece of a powder jet device. Such a powder jet device provides a powder gas mixture, as well as a liquid which exits through the nozzle element being illustrated here. The nozzle element especially is attached to the handpiece by a T-slot 39. Thus, it is possible to remove the nozzle element 38 by performing a secondary pushed movement T2 along the direction along which the T-slot extends. While the T-slot creates a formfitting connection along a direction, extending mainly perpendicular to the extending direction of the T-slot, it allows to remove the nozzle element 38 via a corresponding movement along the extension direction of the T-slot. In the figure 6b it is shown how the tool 1 is pulled over the nozzle element, while figure 6c shows how by a pivot movement R1 of the tool 1. As a consequence, the nozzle element 38 is forced to move along the secondary pushed movement direction T2, such that the nozzle element 38 can be removed from the hand piece of the powder jet device. This is at least partially illustrated in figure 6d.

### Reference numerals:

- 1: tool
- 5: groove
- 10: tool tip
- 11: first pushing element
- 12: second pushing element
- 20: catching area
- 21: first section
- 22: second section
- 30: head section
- 31: first receiving section
- 32: second receiving section
- 33: recess
- 38: nozzle element
- 39: T-slot
- 40: reference mark
- 41: different dental instrument
- 50: powder chamber
- 52: bottom plate
- R1: pivot movement
- P: Pushing direction
- T, T1: pushed movement
- T2: secondary pushed movement

## Claims

1. A tool (1) for transferring a dental tool tip (10) between an assembled state and a disassembled state, the dental tool tip (10)
- being arranged partially in an insert region of a dental instrument (30) in an assembled state, and
- being removed from the insert region of the dental instrument (30) in a disassembled state,
the tool (1) comprising
-- at least a first receiving section (31) being configured to receive at least the insert region of the dental instrument (30) and at least a part of the tool tip (10) **characterised by**
-- at least a first pushing element (11) being configured to perform a first pushing movement, wherein by performing the first pushing movement the first pushing element (11) causes a pushed movement (T) of the dental tool tip (10) to transfer the dental tool tip (10) from a first state to a second state, first and second states being distinct and chosen between the assembled state and the disassembled state, when at least the insert region and at least a part of the tool tip (10) are arranged in the first receiving section (31).

2. The tool (1) according to claim 1, further comprising a second receiving section (32) configured to receive at least the insert region and at least a part of the tool tip (10), the tool (1) further comprising a second pushing element (12) configured to perform a second pushing movement, wherein by performing the second pushing movement the second pushing element (11) causes a pushed movement to transfer the dental tool tip (10) from the second state to the first state, wherein the second receiving section (32) is configured to transfer the dental tool tip (10) from the first state to the second state, when at least the insert region of the dental instrument (30) and at least a part of the tool tip (11) are arranged in the second receiving section (32).

3. The tool (1) according to claim 2, wherein the second receiving section (32) is configured to accommodate at least the insert region and the tool tip (10) in the assembled state.

4. The tool (1) according to claim 2 or 3, wherein the pushed movement of the first pushing movement and the pushed movement of the second pushing movement are directed along pushing directions extending parallel to each other.

5. The tool (1) according to claim 4, wherein the first receiving section (31) and/or second receiving section (32) are configured such that the insert region, being received in the first receiving section (31) or the second receiving section (32), extends along one of the pushing directions (P).

6. The tool (1) according to one of the preceding claims, wherein the first pushing element (11) comprises an actuation section and/or is coupled to an actuation means, wherein the actuation section and/or the actuation means is configured to cause the first pushing movement of the first pushing element (11).

7. The tool (1) according to claim 6, wherein the actuation means and/or the actuation section is screw-able or piston-like.

8. The tool (1) according to one of the preceding claims, wherein the first receiving section (31) and/or the second receiving section (32) has a channel part.

9. The tool (1) according to one of the preceding claims, wherein the tool (1) includes a catching area (20) for catching the disassembled dental tool tip (10) when the dental tool tip (10) is transferred from the assembled state to the disassembled state.

10. The tool (1) according to one of the preceding claims, wherein the tool (1) includes a section (40) for a visually checking a wear status of the dental tool tip (10), when the tool tip (10) is inserted in the section (40).

11. The tool (1) according to claim 10, wherein the section (40) is part of the first receiving section (31) or second receiving section (32).

12. The tool (1) according to one of the preceding claims, wherein the first pushing element (31) and/or the second pushing element (32) is configured to cause a pushing force having a value between 50 N and 250 N.

13. The tool (1) according to one of the preceding claims, wherein the tool (1) is at least partially disk shaped or pen-shaped.

14. The tool (1) according to one of the preceding claims, wherein the tool (1) includes a claw-like section (51).

15. A method for removing a dental tool tip (10) from a dental instrument (30) by using a tool (1) according to one of the claims 1 to 13, comprising:
- inserting the insert region of the dental instrument (30) into the first receiving section (31) and
- performing the first pushing movement for transferring the dental tool tip (10) between the disassembled state to the assembled state.

## Patentansprüche

1. Werkzeug (1) zur Überführung einer zahnmedizinischen Werkzeugspitze (10) zwischen einem zusammengebauten Zustand und einem zerlegten Zustand, wobei die zahnmedizinische Werkzeugspitze (10)
- im zusammengebauten Zustand abschnittsweise in einem Einfügebereich eines zahnärztlichen Instruments (30) angeordnet ist, und
- im zerlegten Zustand aus dem Einfügebereich des zahnärztlichen Instruments (30) entfernt wird,
wobei das Werkzeug (1) umfasst
▪ mindestens einen ersten Aufnahmeabschnitt (31), der so ausgebildet ist, dass er mindestens den Einfügebereich des zahnärztlichen Instruments (30) und mindestens einen Teil der zahnmedizinischen Werkzeugspitze (10) aufnimmt, **gekennzeichnet durch**
▪ mindestens ein erstes Schiebeelement (11), das so ausgebildet ist, dass es eine erste Schiebebewegung ausführt, wobei das erste Schiebeelement (11) durch Ausführen der ersten Schiebebewegung eine Schiebebewegung (T) der zahnmedizinischen Werkzeugspitze (10) bewirkt, um die zahnmedizinische Werkzeugspitze (10) von einem ersten Zustand in einen zweiten Zustand zu überführen, wobei der erste und der zweite Zustand unterschiedlich sind und aus dem zusammengebauten Zustand und dem zerlegten Zustand ausgewählt werden, wenn zumindest der Einfügebereich und zumindest ein Teil der Werkzeugspitze (10) im ersten Aufnahmeabschnitt (31) angeordnet sind.

2. Werkzeug (1) gemäß Anspruch 1, das ferner einen weiteren Aufnahmebereich (32) umfasst, der so ausgebildet ist, dass er zumindest den Einfügebereich und zumindest einen Teil der Werkzeugspitze (10) aufnimmt, wobei das Werkzeug (1) ferner ein zweites Schiebeelement (12) umfasst, das so ausgebildet ist, dass es eine zweite Schiebebewegung ausführt, wobei das zweite Schiebeelement (11) durch Ausführen der zweiten Schiebebewegung eine Schiebebewegung erzeugt, um die zahnmedizinische Instrumentspitze (10) aus dem zweiten Zustand in den ersten Zustand zu bewirken, wobei der zweite Aufnahmeabschnitt (32) so ausgebildet ist, dass er die zahnmedizinische Instrumentspitze (10) aus dem ersten Zustand in den zweiten Zustand überführt, wenn zumindest der Einfügebereich des zahnärztlichen Instruments (30) und zumindest ein Teil der Werkzeugspitze (11) im zweiten Aufnahmeabschnitt (32) angeordnet sind.

3. Werkzeug (1) gemäß Anspruch 2, wobei der zweite Aufnahmeabschnitt (32) so ausgebildet ist, dass er im zusammengebauten Zustand zumindest den Einfügebereich und die Werkzeugspitze (10) aufnimmt.

4. Werkzeug (1) gemäß Anspruch 2 oder 3, wobei die Schiebebewegung der ersten Schiebebewegung und die Schiebebewegung der zweiten Schiebebewegung entlang von zueinander parallel verlaufenden Schieberichtungen ausgerichtet sind.

5. Werkzeug (1) gemäß Anspruch 4, wobei der erste Aufnahmeabschnitt (31) und/oder der zweite Aufnahmeabschnitt (32) derart ausgebildet sind, dass sich der in dem ersten Aufnahmeabschnitt (31) oder dem zweiten Aufnahmeabschnitt (32) aufgenommene Einfügebereich entlang einer der Schieberichtungen (P) erstreckt.

6. Werkzeug (1) gemäß einem der vorhergehenden Ansprüche, wobei das erste Schiebeelement (11) einen Betätigungsabschnitt umfasst und/oder mit einem Betätigungsmittel gekoppelt ist, wobei der Betätigungsabschnitt und/oder das Betätigungsmittel so ausgebildet ist, dass sie die erste Schiebebewegung des ersten Schiebeelements (11) veranlassen.

7. Werkzeug (1) gemäß Anspruch 6, wobei das Betätigungsmittel und/oder der Betätigungsabschnitt schraubbar oder kolbenartig ausgebildet ist.

8. Werkzeug (1) gemäß einem der vorhergehenden Ansprüche, wobei der erste Aufnahmeabschnitt (31) und/oder der zweite Aufnahmeabschnitt (32) einen Kanalteil aufweist.

9. Werkzeug (1) gemäß einem der vorhergehenden Ansprüche, wobei das Werkzeug (1) einen Auffangbereich (20) zum Auffangen der zerlegten zahnmedizinischen Werkzeugspitze (10) umfasst, wenn die zahnmedizinische Werkzeugspitze (10) vom zusammengebauten Zustand in den zerlegten Zustand überführt wird.

10. Werkzeug (1) gemäß einem der vorhergehenden Ansprüche, wobei das Werkzeug (1) einen Abschnitt (40) zur visuellen Verschleißprüfung der zahnmedizinischen Werkzeugspitze (10) umfasst, wenn die Werkzeugspitze (10) in den Abschnitt (40) eingeführt ist.

11. Werkzeug (1) gemäß Anspruch 10, wobei der Abschnitt (40) Teil des ersten Aufnahmeabschnitts (31) oder des zweiten Aufnahmeabschnitts (32) ist.

12. Werkzeug (1) gemäß einem der vorhergehenden Ansprüche, wobei das erste Schiebeelement (31) und/oder das zweite Schiebeelement (32) so ausgebildet ist, dass es eine Druckkraft mit einem Wert zwischen 50 N und 250 N erzeugt.

13. Werkzeug (1) gemäß einem der vorhergehenden Ansprüche, wobei das Werkzeug (1) zumindest teilweise scheibenförmig oder stiftförmig ist.

14. Werkzeug (1) gemäß einem der vorhergehenden Ansprüche, wobei das Werkzeug (1) einen greiferförmigen Abschnitt (51) umfasst.

15. Verfahren zum Entfernen einer zahnmedizinischen Werkzeugspitze (10) von einem zahnärztlichen Werkzeug (30) unter Verwendung eines Instruments (1) gemäß einem der Ansprüche 1 bis 13, umfassend:
- Einführen des Einfügebereichs des zahnärztlichen Werkzeugs (30) in den ersten Aufnahmeabschnitt (31) und
- Ausführen der ersten Schiebebewegung, um die zahnmedizinische Werkzeugspitze (10) vom zerlegten Zustand in den zusammengebauten Zustand zu überführen.

## Revendications

1. Outil (1) pour transférer un embout d'outil dentaire (10) entre un état assemblé et un état démonté, l'embout d'outil dentaire (10)
- étant disposé partiellement dans une zone d'insertion d'un instrument dentaire (30), à l'état assemblé, et
- étant retiré de la zone d'insertion de l'instrument dentaire (30), à l'état démonté,
l'outil (1) comprenant
-- au moins une première section de réception (31) conçue pour recevoir au moins la zone d'insertion de l'instrument dentaire (30) et au moins une partie de l'embout d'outil (10),
**caractérisé par**
-- au moins un premier élément de poussée (11) conçu pour effectuer un premier mouvement de poussée, sachant que, en effectuant le premier mouvement de poussée, le premier élément de poussée (11) provoque un mouvement poussé (T) de l'embout d'outil dentaire (10) pour transférer l'embout d'outil dentaire (10) d'un premier état à un deuxième état, les premier et deuxième états étant distincts et choisis entre l'état assemblé et l'état démonté, lorsqu'au moins la zone d'insertion et au moins une partie de l'embout d'outil (10) sont disposées dans la première section de réception (31).

2. Outil (1) selon la revendication 1,
comprenant en outre une deuxième section de réception (32) conçue pour recevoir au moins la zone d'insertion et au moins une partie de l'embout d'outil (10), l'outil (1) comprenant en outre un deuxième élément de poussée (12) conçu pour effectuer un deuxième mouvement de poussée, sachant que, en effectuant le deuxième mouvement de poussée, le deuxième élément de poussée (11) provoque un mouvement poussé pour transférer l'embout d'outil dentaire (10) du deuxième état au premier état, et la deuxième section de réception (32) est conçue pour transférer l'embout d'outil dentaire (10) du premier état au deuxième état, lorsqu'au moins la zone d'insertion de l'instrument dentaire (30) et au moins une partie de l'embout d'outil (11) sont disposées dans la deuxième section de réception (32).

3. Outil (1) selon la revendication 2,
dans lequel la deuxième section de réception (32) est conçue pour accueillir au moins la zone d'insertion et l'embout d'outil (10), à l'état assemblé.

4. Outil (1) selon la revendication 2 ou 3,
dans lequel le mouvement poussé du premier mouvement de poussée et le mouvement poussé du deuxième mouvement de poussée sont dirigés le long de directions de poussée s'étendant parallèlement l'une à l'autre.

5. Outil (1) selon la revendication 4,
dans lequel la première section de réception (31) et/ou la deuxième section de réception (32) sont conçues de telle sorte que la zone d'insertion, reçue dans la première section de réception (31) ou dans la deuxième section de réception (32), s'étend le long de l'une des directions de poussée (P).

6. Outil (1) selon l'une des revendications précédentes,
dans lequel le premier élément de poussée (11) comprend une section d'actionnement et/ou est couplé à un moyen d'actionnement, la section d'actionnement et/ou le moyen d'actionnement étant conçu(e) pour provoquer le premier mouvement de poussée du premier élément de poussée (11).

7. Outil (1) selon la revendication 6,
dans lequel le moyen d'actionnement et/ou la section d'actionnement est vissable ou en forme de piston.

8. Outil (1) selon l'une des revendications précédentes,
dans lequel la première section de réception (31) et/ou la deuxième section de réception (32) présente une partie formant canal.

9. Outil (1) selon l'une des revendications précédentes,
dans lequel l'outil (1) comprend une zone de capture (20) pour saisir l'embout d'outil dentaire (10) démonté, lorsque l'embout d'outil dentaire (10) est transféré de l'état assemblé à l'état démonté.

10. Outil (1) selon l'une des revendications précédentes,
dans lequel l'outil (1) comprend une section (40) pour un contrôle visuel de l'état d'usure de l'embout d'outil dentaire (10), lorsque l'embout d'outil (10) est inséré dans ladite section (40).

11. Outil (1) selon la revendication 10,
dans lequel la section (40) fait partie de la première section de réception (31) ou de la deuxième section de réception (32).

12. Outil (1) selon l'une des revendications précédentes,
dans lequel le premier élément de poussée (31) et/ou le deuxième élément de poussée (32) est conçu pour provoquer une force de poussée ayant une valeur comprise entre 50 N et 250 N.

13. Outil (1) selon l'une des revendications précédentes,
dans lequel l'outil (1) est au moins partiellement en forme de disque ou de stylo.

14. Outil (1) selon l'une des revendications précédentes,
dans lequel l'outil (1) comprend une section en forme de griffe (51).

15. Procédé de retrait d'un embout d'outil dentaire (10) d'un instrument dentaire (30) à l'aide d'un outil (1) selon l'une des revendications 1 à 13, consistant à :
- insérer la zone d'insertion de l'instrument dentaire (30) dans la première section de réception (31), et
- effectuer le premier mouvement de poussée pour transférer l'embout d'outil dentaire (10) de l'état démonté à l'état assemblé.
